# EUROPÄISCHE PATENTANMELDUNG

(11) **EP 1 860 839 A1**
(43) Veröffentlichungstag der Anmeldung: **28.11.2007**
(21) Anmeldenummer: 06010767.9
(22) Anmeldetag: 24.05.2006
(51) Int. Cl.: H04L 27/26

(54) **Verteilung von Bits auf Funkkanäle unter Berücksichtigung der Funkkanal-Qualität**

(71) Anmelder: NOKIA SIEMENS NETWORKS GMBH & CO. KG, 81541 München (DE)
(72) Erfinder: Heim, Axel, 89073 Ulm (DE); Weckerle, Martin, Dr., 89077 Ulm (DE)

(57) **Zusammenfassung**

Die Erfindung betrifft ein Verfahren zur Kommunikation per Funk, bei dem einem Sender (TX) eine an einen Empfänger (RX) zu versendende Bitfolge (I1) vorliegt. Der Sender (TX) führt eine Kodierung der Bitfolge (11) durch. Weiterhin führt der Sender (TX) anhand eines Verteilungsmusters eine Verteilung der Bits der kodierten Bitfolge (12) auf eine Mehrzahl von Funkkanälen durch. Gemäß dem Verteilungsmuster werden Wichtigkeiten (W) der Bits der kodierten Bitfolge (I2) und Informationen betreffend eine Qualität von mindestens einem der Funkkanäle berücksichtigt, wobei die Wichtigkeiten (W) einer Bedeutung des jeweiligen Bits bei einer Dekodierung durch den Empfänger (RX) entsprechen. Der Sender (TX) sendet die Bits der kodierten Bitfolge (I2) unter Verwendung der Mehrzahl von Funkkanälen gemäß der durchgeführten Verteilung. Weiterhin betrifft die Erfindung einen Sender (TX), einen Empfänger (RX), sowie Computerprogrammprodukte zur Durchführung des Verfahrens.

## Beschreibung

Die Erfindung betrifft ein Verfahren zur Kommunikation per Funk, bei dem einem Sender eine an einen Empfänger zu versendende Bitfolge vorliegt, der Sender eine Kodierung der Bitfolge durchführt, und anhand eines Verteilungsmusters eine Verteilung der Bits der kodierten Bitfolge auf eine Mehrzahl von Funkkanäle durchführt.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen Sender und Empfänger übertragen. Bei den Funkstationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Kodebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Kodebereichs-Vielfachzugriffsverfahren.

Um eine möglichst effiziente Übertragung von Daten zu erreichen, kann man das gesamte zur Verfügung stehende Frequenzband in mehrere Subbänder (Multicarrier- bzw. Mehrträgerverfahren) zerlegen. Die den Mehrträgersystemen zugrunde liegende Idee ist es, das Ausgangsproblem der Übertragung eines breitbandigen Signals in die Übertragung mehrerer schmalbandiger Signale zu überführen. Ein Beispiel für ein Mehrträger-übertragungsverfahren ist OFDM (Orthogonal Frequency Division Multiplexing), bei welchem für die Subbänder zeitlich annähernd rechteckige Pulsformen verwendet werden. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen.

Bei der Übertragung von Bits über einen Funkkanal werden üblicherweise Verfahren der Kanalkodierung eingesetzt, um eine zuverlässige, möglichst fehlerfreie Übertragung zu gewährleisten. Bei der Kanalkodierung handelt es sich um Kodierverfahren, bei welchen die Eigenschaften eines Übertragungskanals berücksichtigt werden, um die Redundanz von zu übertragenden Daten gezielt zur Fehlererkennung bzw. Fehlerkorrektur zu erhöhen. Verfahren zur Kanalkodierung sind z.B. die Blockkodierung und die Faltungskodierung. Im Gegensatz hierzu reduziert die Quellenkodierung die Redundanz.

Senderseitig findet im Kodierer die Umwandlung von zu kodierenden Bits in kodierte Bits und eine Abbildung der kodierten Bits in Symbole statt, welche dann über den Kanal zum Empfänger übertragen werden. Während der Übertragung werden die Symbole in der Regel durch Störeinflüsse verfälscht. Die Aufgabe des Dekodierers auf der Seite des Empfängers besteht darin, eventuell aufgetretene Übertragungsfehler zu erkennen bzw. aus dem empfangenen, verfälschten Signal die ursprünglichen Bits zu ermitteln.

Der Erfindung liegt die Aufgabe zugrunde, ein senderseitiges Verfahren vorzustellen, bei welchem ein Sender eine Bitfolge kodiert und auf einer Mehrzahl von Funkkanälen versendet, sowie ein korrespondierendes empfängerseitiges Verfahren. Weiterhin sollen ein Sender, ein Empfänger, sowie Computerprogrammprodukte zur Durchführung der Verfahren vorgestellt werden.

Diese Aufgabe wird durch ein Verfahren mit den Merkmalen des Anspruchs 1, sowie durch ein Verfahren, Vorrichtungen und Computerprogrammprodukte mit Merkmalen von nebengeordneten Ansprüchen gelöst. Vorteilhafte Ausgestaltungen und Weiterbildungen sind Gegenstand von Unteransprüchen.

Bei dem ersten erfindungsgemäßen Verfahren zur Kommunikation per Funk liegt einem Sender eine an einen Empfänger zu versendende Bitfolge vor. Der Sender führt eine Kodierung der Bitfolge durch. Anhand eines Verteilungsmusters führt der Sender eine Verteilung der Bits der kodierten Bitfolge auf eine Mehrzahl von Funkkanäle durch. Gemäß dem Verteilungsmuster werden Wichtigkeiten der Bits der kodierten Bitfolge berücksichtigt, wobei die Wichtigkeiten einer Bedeutung des jeweiligen Bits bei einer Dekodierung durch den Empfänger entsprechen. Weiterhin werden gemäß dem Verteilungsmuster Informationen betreffend eine Qualität von mindestens einem der Funkkanäle berücksichtigt. Der Sender sendet die Bits der kodierten Bitfolge unter Verwendung der Mehrzahl von Funkkanälen gemäß der durchgeführten Verteilung.

Senderseitig wird durch eine Kodierung eine erste in eine zweite Bitfolge umgewandelt, wobei eine Kodierungsvorschrift zum Einsatz kommt. Ist dem Empfänger die Kodierungsvorschrift bekannt, kann er unter Verwendung einer entsprechenden Dekodierungsvorschrift aus der kodierten Bitfolge die ursprüngliche Bitfolge zurückgewinnen. Bei der von dem Sender durchgeführten Kodierung handelt es sich vorzugsweise um eine Kanalkodierung, wie z.B. um eine Faltungskodierung oder eine Turbokodierung, durch welche der ursprünglichen Bitfolge Redundanz hinzugefügt wird.

Vor der Versendung der Bits werden diese auf verschiedene Funkkanäle verteilt. Bei den Funkkanälen kann es sich z.B. um verschiedene Subbänder eines Frequenzbandes, um verschiedene Kodes, oder um verschiedene Raumrichtungen handeln. Vorzugsweise liegen orthogonale Funkkanäle vor. Die für die Versendung der Bits an den Empfänger verwendeten Funkkanäle können zuvor dem Empfänger zur Kommunikation mit dem Sender zugewiesen worden sein oder dem Sender zur Kommunikation mit dem Empfänger zugewiesen worden sein. Bei der Verteilung der Bits auf die Funkkanäle ist es möglich, dass jedem der Mehrzahl der Funkkanäle genau ein Bit der kodierten Bitfolge zugeordnet wird; auch eine Zuordnung mehrerer Bits zu einzelnen Funkkanälen ist möglich.

Bei der Verteilung der Bits werden Wichtigkeiten der Bits berücksichtigt. Dies bedeutet, dass hierbei für zumindest ein Bit der kodierten Bitfolge dessen Wichtigkeit berücksichtigt wird. Vorzugsweise wird für alle Bits der kodierten Bitfolge die jeweilige Wichtigkeit berücksichtigt. Die Wichtigkeit ist eine Größe, welche festgelegt wird anhand der Bedeutung eines Bits bzw. von Information über dieses Bit im Rahmen der empfängerseitigen Dekodierung. Demgemäß hat ein wichtiges Bit große Bedeutung für die erfolgreiche Dekodierung durch den Empfänger, während ein unwichtiges Bit lediglich wenig Bedeutung für das Dekodierergebnis hat.

Zusätzlich zu den Wichtigkeiten werden bei der Verteilung der Bits auf die Funkkanäle Informationen betreffend die Qualität von mindestens einem der Funkkanäle berücksichtigt. Es ist möglich, dass diese Informationen lediglich einen, mehrere, oder auch jeden Funkkanal der betrachteten Mehrzahl von Funkkanälen betreffen. Die Qualität eines Funkkanals kann hierbei anhand verschiedener Kriterien beurteilt werden, z.B. vorzugsweise anhand der Funkkanaldämpfung.

Nach Anwendung des Verteilungsmusters auf die Bits und vor der Versendung der Bits auf den jeweiligen, der Verteilung entsprechenden Funkkanälen, können senderseitig weitere Schritte erfolgen, wie z.B. eine Modulation und eine Digital/Analog-Wandlung. Wird hierbei ein höherwertiges Modulationsalphabet verwendet, so sollte darauf geachtet werden, dass jedem Symbol nur Bits gleicher Wichtigkeit zugeordnet werden.

Bei dem zweiten erfindungsgemäßen Verfahren zur Kommunikation per Funk empfängt ein Empfänger Informationen auf einer Mehrzahl von Funkkanälen. Der Empfänger ermittelt aus den Informationen Werte. Der Empfänger erstellt anhand eines Verteilungsmusters aus den Werten eine Wertefolge. Gemäß dem Verteilungsmuster werden Wichtigkeiten der Werte der Wertefolge berücksichtigt, wobei die Wichtigkeiten einer Bedeutung des jeweiligen Wertes bei einer Dekodierung durch den Empfänger entsprechen. Weiterhin werden gemäß dem Verteilungsmuster Informationen betreffend eine Qualität von mindestens einem der Funkkanäle berücksichtigt. Der Empfänger führt eine Dekodierung der erstellten Wertefolge durch.

Der Empfänger ermittelt Werte aus empfangenen Informationen. Empfängt der Empfänger ein analoges Signal und führt eine Analog/Digitalwandlung mit harter Entscheidung (Hard Decision) durch, handelt es sich bei den Werten um Bits. Empfängt der Empfänger ein analoges Signal und führt eine Analog/Digitalwandlung mit weicher Entscheidung (Soft Decision) durch, handelt es sich bei den Werten um Wahrscheinlichkeiten (Likelyhood Werte). Die obigen Ausführungen betreffend das senderseitige Verfahren sind mit der Maßgabe, dass empfängerseitig nicht notwendigerweise Bits vorliegen, entsprechend auch auf das empfängerseitige Verfahren anwendbar.

Vorzugsweise setzen der Sender und der Empfänger das gleiche Verteilungsmuster ein. Somit entspricht das empfängerseitige Vorgehen dem inversen des senderseitigen. Hierdurch kann die senderseitige Reihenfolge der kodierten Bits in der entsprechende Reihenfolge der empfängerseitigen Wertefolge zurückgewonnen werden. Um die Verwendung eines einheitlichen Verteilungsmusters sicherzustellen, kann der Sender dem Empfänger oder der Empfänger dem Sender mitteilen, welches Verteilungsmuster angewendet werden soll. Alternativ können Sender und Empfänger unabhängig voneinander mit der gleichen zugrunde gelegten Strategie zum gleichen Verteilungsmuster kommen, ohne dieses explizit dem jeweils anderen Kommunikationspartner mitzuteilen.

In Weiterbildung der Erfindung wird zuvor über das zu verwendende Verteilungsmuster entschieden, und zwar unter Verwendung von Informationen betreffend Funkausbreitungsbedingungen zwischen dem Sender und dem Empfänger. Diese Entscheidung kann von dem Sender oder von dem Empfänger getroffen werden, wobei vorzugsweise der die Entscheidung treffende Kommunikationspartner dem anderen mitteilt, welches Verteilungsmuster angewendet werden soll. Die Abhängigkeit des Verteilungsmusters von den Funkausbreitungsbedingungen ermöglicht eine dynamisches Vorgehen unter Anpassung an sich verändernde Funkübertragungsbedingungen, wodurch die Qualität der Kommunikation zwischen Sender und Empfänger gesteigert werden kann.

Einer bevorzugten Ausgestaltung der Erfindung gemäß übermittelt der Empfänger zuvor dem Sender die Informationen betreffend die Qualität von mindestens einem der Funkkanäle. So kann der Empfänger die Qualität von einem, mehreren oder allen der Funkkanäle bestimmen, und den Sender im Anschluss hierüber informieren. Diese an den Sender übermittelte Information kann der vollständigen von dem Empfänger ermittelten oder auch lediglich einem Teil hiervon entsprechen, oder auch von Messergebnissen des Empfängers abgeleitetet sein. Vorzugsweise betreffen die Informationen betreffend die Qualität von mindestens einem der Funkkanäle genau einen der Funkkanäle. Dies ermöglicht die Einsparung von Funkressourcen in der Übertragungsrichtung von dem Empfänger zu dem Sender.

Vorteilhaft ist es, wenn das Verteilungsmuster Korrelationen zwischen jeweils einer Position innerhalb einer Folge einerseits und einem Funkkanal andererseits angibt. Dies ließe sich z.B. als Tabelle darstellen, wobei in einer ersten Spalte die Positionen stehen und in einer zweiten Spalte der zu der in der gleichen Zeile stehenden Position korrespondierende Funkkanal. In Bezug auf den Sender handelt es sich bei der Folge um die kodierte Bitfolge, in Bezug auf den Empfänger um die zu erstellende Wertefolge.

Einer Weiterbildung der Erfindung gemäß umfasst das Verteilungsmuster eine Zuordnung von unwichtigen Bits und/oder Werten zu Funkkanälen mit schlechter Qualität. Hierbei wird zumindest ein Bit und/oder Wert, welches einen niedrigen Wert der Wichtigkeit aufweist, einem Kanal, welcher einen niedrigen Wert der Qualität aufweist, zugeordnet. Vorteilhaft ist auch eine symmetrische Verteilung von unwichtigen Bits und/oder Werte um einen Funkkanal mit schlechter Qualität.

Durch letzteres können Ähnlichkeiten zwischen benachbarten Funkkanälen berücksichtigt werden.

Mit Vorzug wird für die Berücksichtigung der Wichtigkeiten eine Zuordnungsvorschrift eingesetzt, welche jeder Position innerhalb einer Folge eine Wichtigkeit zuordnet. Diese Zuordnungsvorschrift kann unabhängig von den tatsächlich zu versendeten bzw. empfangenen Informationen festgelegt werden, somit a priori definiert sein. Für die Zuordnung der Wichtigkeiten ist somit nicht der konkrete Wert relevant, sondern die Position in einer Folge. Bei einer Verwendung der Zuordnungsvorschrift durch den Sender handelt es sich bei der Folge um die die kodierten Bits enthaltende Bitfolge, bei einer Verwendung der Zuordnungsvorschrift durch den Empfänger handelt es sich bei der Folge um die von dem Empfänger aus den Werten zu erstellende Wertefolge.

In Ausgestaltung der Erfindung wird nach einer fehlgeschlagenen Übertragung von dem Sender zu dem Empfänger bei einer wiederholten Verarbeitung der gleichen Informationen ein anderes Verteilungsmuster eingesetzt. Dieses Vorgehen, welches für ARQ-Verfahren geeignet ist, kann sowohl von dem Sender als auch von dem Empfänger angewandt werden.

Dem erfindungsgemäßen Sender zur Kommunikation per Funk liegt eine an einen Empfänger zu versendende Bitfolge vor. Er verfügt über Mittel zum Kodieren der Bitfolge, sowie über Mittel zum Verteilen der Bits der kodierten Bitfolge auf eine Mehrzahl von Funkkanäle anhand eines Verteilungsmusters. Gemäß dem Verteilungsmuster werden Wichtigkeiten der Bits der kodierten Bitfolge berücksichtigt, wobei die Wichtigkeiten einer Bedeutung des jeweiligen Bits bei einer Dekodierung durch den Empfänger entsprechen. Weiterhin werden gemäß dem Verteilungsmuster Informationen betreffend eine Qualität von mindestens einem der Funkkanäle berücksichtigt. Der Sender umfasst weiterhin Mittel zum Senden der Bits der kodierten Bitfolge unter Verwendung der Mehrzahl von Funkkanälen gemäß der durchgeführten Verteilung.

Der erfindungsgemäße Empfänger zur Kommunikation per Funk umfasst Mittel zum Empfangen von Informationen auf einer Mehrzahl von Funkkanälen, sowie Mittel zum Ermitteln von Werten aus den Informationen, und Mittel zum Erstellen einer Wertefolge aus den Werten anhand eines Verteilungsmusters. Gemäß dem Verteilungsmuster werden Wichtigkeiten der Werte der Wertefolge berücksichtigt, wobei die Wichtigkeiten einer Bedeutung des jeweiligen Wertes bei einer Dekodierung durch den Empfänger entsprechen. Weiterhin werden gemäß dem Verteilungsmuster Informationen betreffend eine Qualität von mindestens einem der Funkkanäle berücksichtigt. Schließlich verfügt der erfindungsgemäße Empfänger über Mittel zum Dekodieren der erstellten Wertefolge.

Das erfindungsgemäße Computerprogrammprodukt für einen Sender zur Kommunikation per Funk, welchem eine an einen Empfänger zu versendende Bitfolge vorliegt, umfasst Mittel zum Kodieren der Bitfolge, sowie Mittel zum Verteilen der Bits der kodierten Bitfolge auf eine Mehrzahl von Funkkanäle anhand eines Verteilungsmusters. Gemäß dem Verteilungsmuster werden Wichtigkeiten der Bits der kodierten Bitfolge berücksichtigt, wobei die Wichtigkeiten einer Bedeutung des jeweiligen Bits bei einer Dekodierung durch den Empfänger entsprechen. Weiterhin werden gemäß dem Verteilungsmuster Informationen betreffend eine Qualität von mindestens einem der Funkkanäle berücksichtigt.

Das erfindungsgemäße Computerprogrammprodukt für einen Empfänger zur Kommunikation per Funk, welchem aus auf einer Mehrzahl von Funkkanälen empfangenen Informationen ermittelte Werte vorliegen, umfasst Mittel zum Erstellen einer Wertefolge aus den Werten anhand eines Verteilungsmusters. Gemäß dem Verteilungsmuster werden Wichtigkeiten der Werte der Wertefolge berücksichtigt, wobei die Wichtigkeiten einer Bedeutung des jeweiligen Wertes bei einer Dekodierung durch den Empfänger entsprechen. Weiterhin werden gemäß dem Verteilungsmuster Informationen betreffend eine Qualität von mindestens einem der Funkkanäle berücksichtigt. Schließlich umfasst das erfindungsgemäße Computerprogrammprodukt für einen Empfänger über Mittel zum Dekodieren der erstellten Wertefolge.

Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Der erfindungsgemäße Sender, der erfindungsgemäße Empfänger, sowie die erfindungsgemäßen Computerprogrammprodukte eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Sender und einen Empfänger eines Funkkommunikationssystems,
- Figur 2:: ein Frequenzband.

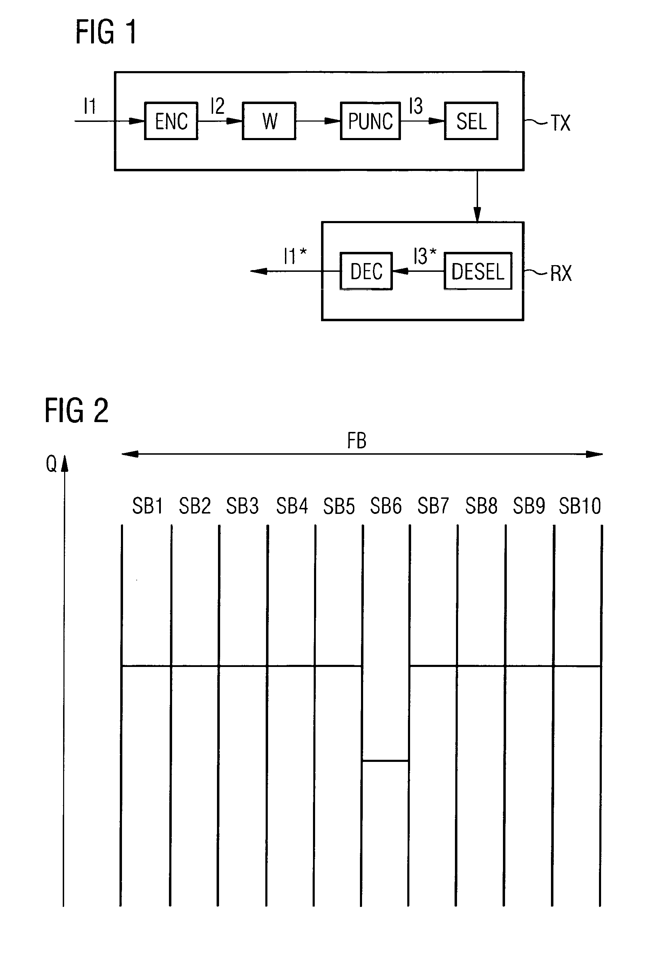

In Figur 1 sind eine Funkstation TX und eine Funkstation RX dargestellt, welche per Funk miteinander kommunizieren. Die Darstellung der Funkstationen TX und RX ist stark vereinfachend, es sind lediglich für die Erfindung besonders relevante Bestandteile gezeigt. Bei der Funkstation TX kann es sich z.B. um eine netzseitige Funkstation und bei der Funkstation RX um eine Teilnehmerstation eines Mobilfunkkommunikationssystems handeln. In diesem Fall wird eine Kommunikation in Abwärtsrichtung betrachtet. Die Erfindung ist jedoch auch auf eine Kommunikation in Aufwärtsrichtung anwendbar.

Die Kommunikation zwischen der Funkstation TX und der Funkstation RX erfolgt unter Verwendung eines in Figur 2 dargestellten Frequenzbandes FB. Das Frequenzband FB ist in zehn äquidistante Subbänder SB1 bis SB10 untergliedert. Zur Funkübertragung wird dementsprechend eine Mehrträgertechnologie, vorzugsweise OFDM, eingesetzt. Bei der Aufteilung des Frequenzbandes FB in die 10 Subbänder der Figur 2 handelt es sich lediglich um ein Beispiel, reelle Systeme weisen oftmals eine deutlich größere Anzahl von Subbändern auf. Bei den zehn Subbändern SB1 bis SB10 bzw. bei dem Frequenzband FB kann es sich um einen Ausschnitt eines breiteren Frequenzbandes handeln, wobei dieser Ausschnitt zur Kommunikation zwischen den Funkstationen TX und RX verwendet wird.

Die Funkstation RX bestimmt für die Subbänder SB1 bis SB10 jeweils eine Größe, welche die Übertragungsqualität auf den einzelnen Subbändern SB1 bis SB10 bei einer Signalübertragung von der Funkstation TX an die Funkstation RX angibt. Als Qualitätsgröße kann z.B. die Signaldämpfung herangezogen werden. Hierzu sendet die Funkstation TX Signale mit der Funkstation RX bekannter Sendestärke auf den Subbändern SB1 bis SB10, woraufhin die Funkstation RX die Empfangsstärke misst und anhand des Verhältnisses von Empfangsstärke zu Sendestärke die Dämpfung ermittelt. Auch ohne Kenntnis der Sendestärke kann die Funkstation RX durch Vergleich der Empfangssignalpegel der auf den unterschiedlichen Subbändern empfangenen Signale ein relatives Qualitätsmaß ermitteln, wodurch der relativ schlechteste oder die relativ schlechtesten Subbänder identifiziert werden können.

Nach Bestimmung der Qualität der Subbänder SB1 bis SB10 übermittelt die Funkstation RX der Funkstation TX eine Qualitätsgröße Q. Dieses Vorgehen bezweckt, dass bei einer zukünftigen Nachrichtenübertragung von der Funkstation TX an die Funkstation RX eine möglichst gute Übertragungsqualität erzielt werden kann, bzw. dass bei einer bestimmten Übertragungsqualität eine möglichst hohe Datenrate erzielt werden kann. Im allgemeinen gilt, dass dies umso besser gelingt, je detaillierter die von der Funkstation RX übermittelte Qualitätsgröße Q ist. Hierzu wäre es vorteilhaft, die Qualität eines jeden Subbandes SB1 bis SB10 anzugeben. Dies erfordert jedoch einen großen Aufwand an Funkressourcen in der Übertragungsrichtung von der Funkstation RX zu der Funkstation TX. Dies gilt insbesondere für den Fall, dass eine Vielzahl von Subbändern vorhanden sind.

Um wenig Funkressourcen für die Übertragung der Qualitätsgröße Q aufwenden zu müssen, übermittelt die Funkstation RX der Funkstation TX lediglich Informationen betreffend einen Teil der von ihr durchgeführten Messungen, nämlich die Information, dass für das Subband SB6 die schlechteste Übertragungsqualität festgestellt wurde. Der Funkstation TX bietet sich daher in Bezug auf die ihr übermittelte Qualitätsgröße Q das in Figur 2 dargestellte Bild: die Subbänder SB1, SB2, SB3, SB4, SB5, SB7, SB8, SB9 und SB10 sind gut, während das Subband SB6 schlecht ist. Dies entspricht einer binären Darstellung bzw. einer binären Qualitätsgröße Q.

Bei der erläuterten Übermittlung der Qualitätsgröße Q wird lediglich eine einzelne Größe signalisiert, nämlich eine Identifikationsinformation eines Subbandes. Hierbei handelt es sich lediglich um ein Beispiel. Offensichtlich beschreibt die der Funkstation TX übermittelte Qualitätsgröße Q, wie sie in Figur 2 dargestellt ist, die reelle Qualitäts-Situation dann gut, wenn ein einziges schmales tiefes Fading-Loch vorhanden ist, während die Übertragungsqualität für die Subbänder außerhalb dieses Einbruchs annähernd konstant ist. Wäre hingegen ein mehrere Subbänder breiter Einbruch der Übertragungsqualität vorhanden, so wäre es vorteilhafter, als Qualitätsgröße Q eine Mehrzahl von benachbarten Subbändern zu signalisieren, über welche sich dieser breite Einbruch der Übertragungsqualität erstreckt. Wären andererseits eine Mehrzahl schmaler tiefer Fading-Löcher vorhanden, so wäre die Signalisierung von mehreren Subbändern, welche sich jeweils am tiefsten Punkt eines Fading-Lochs befinden, als Qualitätsgröße Q geeignet.

Auf diese Weise kann eine Mehrzahl von Typen von signalisierbaren Qualitätsgrößen Q definiert werden. Um die der Funkstation TX von der Funkstation RX zur Verfügung gestellte Qualitätsgröße Q der reellen Situation anzupassen, ist es vorteilhaft, wenn die Funkstation RX -abhängig von den von ihr bestimmten Qualitäten der Subbänder SB1 bis SB10- den Typ der zu signalisierenden Qualitätsgröße Q auswählt. Um der Funkstation TX anzuzeigen, für welchen Typ sich die Funkstation RX entschieden hat, kann eine eigene Signalisierungsinformation zur expliziten Anzeige des Typs eingesetzt werden. Alternativ ist es auch möglich, dass die Funkstation TX anhand der empfangenen Qualitätsgröße Q ermitteln kann, um welchen Typ es sich handelt.

Im folgenden wird erläutert, auf welche Weise die Funkstation TX ihre Kenntnis über die Qualitätsgröße Q einsetzt. Gemäß Figur 1 liegt der Funkstation TX eine Bitfolge I1 vor, welche an die Funkstation RX zu versenden ist. Hierbei kann es sich um Nutz- und/oder Signalisierungsinformation handeln. Wie bei Funkübertragungen üblich, wird die Bitfolge I1 durch einen Kodierer ENC kanalkodiert. Beispielsweise kann es sich bei dem Kodierer ENC um einen einfachen Faltungskodierer (englisch: convolutional encoder) handeln, oder auch um einen Turbokodierer, bei welchem mehrere Faltungskodierer parallel eingesetzt werden.

Durch die Kanalkodierung wird der Bitfolge I1 Redundanz hinzugefügt, so dass die von dem Kodierer ENC ausgegebene Bitfolge I2 aus einer größeren Anzahl von Bits besteht als die ursprüngliche Bitfolge I1. Den Bits der Bitfolge I2 werden im folgenden Wichtigkeiten W zugeordnet. Die Wichtigkeit W eines Bits gibt hierbei an, wie wertvoll das Vorhandensein dieses Bits in den von der Funkstation RX der Dekodierung zu Grunde gelegten Bits ist. Das wichtigste Bit würde daher, falls es von der Funkstation RX nicht korrekt empfangen würde, die größte Verschlechterung des Dekodierergebnisses bewirken, das zweitwichtigste Bit die zweitgrößte Verschlechterung, usw.

Die Zuordnung der Wichtigkeiten W erfolgt hierbei unabhängig von dem Wert eines Bits, sondern vielmehr abhängig von der Position eines Bits innerhalb der Bitfolge I2. Es kommt eine Vorschrift zum Einsatz, welche einer jeden Position innerhalb einer Bitfolge einen bestimmten Wert der Wichtigkeit W zuordnet. Eine derartige Zuordnung von Wichtigkeiten kann für Turbokodes z.B. gemäß dem in
Rowitch, Milstein: "On the Performance of Hybrid FEC/ARQ Systems Using Rate Compatible Punctured Turbo (RCPT) Codes", IEEE Trans. Comm. 2000
vorgestellten Verfahren erfolgen. Hier werden unter der Annahme periodischer Punktierung von systematischen und Redundanzbits von Turbokodes und der Koderate-Kompatibilitätsbedingung, d.h. jeder stärker punktierte Kode ist Sub-Kode eines weniger stark punktierten Kodes des gleichen Mutterkodes, Punktierungsmatrizen für Kodes angegeben, welche für eine gegebene Kodierrate die Dekodierfehlerwahrscheinlichkeit minimieren bzw. ein mit der Fehlerwahrscheinlichkeit zusammenhängendes Maß optimieren. Die Matrizen werden so bestimmt, dass ausgehend von den unpunktierten kodierten Bits sukzessive für jede sich aus der Punktierungsperiode ergebenden mögliche Kodierrate jeweils das Bit derjenigen Position zusammen mit den entsprechenden Bits im periodischen Abstand punktiert wird, für welches die Einbuße hinsichtlich der Dekodierperformanz am geringsten ist. Die Wichtigkeit wird dabei jeweils relativ zu den tatsächlich gesendeten Kodebits bestimmt, d.h. wird die Kodebitfolge punktiert, so spielen die punktieren Kodebits für die Bestimmung der Wichtigkeit keine Rolle mehr. Die unwichtigsten Kodebits sind nun die Kodebits, die bei einer weiteren Punktierung herausgenommen werden würden.

Die Verwendung der genannten Punktierungsmatrizen ist zwar vorteilhaft zur Bestimmung der Wichtigkeiten W im Rahmen der Erfindung, es können jedoch auch andere Verfahren hierfür zum Einsatz kommen. Insbesondere kann berücksichtigt werden, dass Terminierungsbits (englisch: tail bits) grundsätzlich eine hohe Wichtigkeit W haben sollten. Im folgenden wird davon ausgegangen, dass eine Vorschrift existiert, welche unter Berücksichtigung des empfängerseitigen Dekodierungsverfahrens jeder Position einer Bitfolge eine Wichtigkeit W zuordnet, so dass jedem Bit der Bitfolge I2 eine Wichtigkeit W zugeordnet werden kann.

Im Anschluss erfolgt im Bestandteil PUNC der Funkstation TX eine Punktierung der Bitfolge I2. Hierdurch kann die Anzahl der an die Funkstation RX zu versenden Bits dem Umfang der hierfür zur Verfügung stehenden Funkressourcen angepasst werden. Bei der Punktierung werden die Wichtigkeiten W eingesetzt, so dass lediglich die am wenigsten wichtigen Bits aus der Bitfolge I2 entfernt werden. Die den Bestandteil PUNC verlassende Bitfolge I3 enthält somit weniger Bits als die Bitfolge I2. Bei der Punktierung handelt es sich um einen optionalen Schritt, welcher gegebenenfalls ausgelassen werden kann. In dem betrachteten Beispiel erfolgt die Punktierung derart, dass die Bitfolge I3 aus 10 Bits, entsprechend der Anzahl der Subbänder SB1 bis SB10, besteht.

Bei den Bits der Bitfolge I3 handelt es sich um diejenigen Bits, welche auf den Subbändern SB1 bis SB10 an die Funkstation RX zu versenden sind. Im Bestandteil SEL werden die Bits der Bitfolge I3 für die Versendung gemäß ihrer Wichtigkeit W auf die Subbänder SB1 bis SB10 verteilt. Hierfür wird die der Funkstation TX von der Funkstation RX übermittelte Qualitätsgröße Q verwendet. Für die Verteilung der Bits der Bitfolge I3 auf die Subbänder SB1 bis SB10 setzt die Funkstation TX eine der Funkstation RX bekannte Anordnungsvorschrift ein. Im folgenden wird beispielhaft eine einfache Anordnungsvorschrift, bestehend aus einem ersten Anordnungsmuster für die schlechtesten 5 Bits und einem zweiten Anordnungsmuster für die besten 5 Bits, erläutert.

Gemäß dem ersten Anordnungsmuster für die 5 am wenigsten wichtigen Bits wird:
- Das Bit mit der niedrigsten Wichtigkeit W dem Subband SB6 mit der schlechtesten Qualität zugeordnet.
- Das Bit mit der zweitniedrigsten Wichtigkeit W dem Subband SB5, welches sich links neben dem Subband SB6 mit der schlechtesten Qualität befindet, zugeordnet.
- Das Bit mit der drittniedrigsten Wichtigkeit W dem Subband SB7, welches sich rechts neben dem Subband SB6 mit der schlechtesten Qualität befindet, zugeordnet.
- Das Bit mit der viertniedrigsten Wichtigkeit W dem Subband SB4, welches sich zwei Subbänder zur linken des Subbandes SB6 mit der schlechtesten Qualität befindet, zugeordnet.
- Das Bit mit der fünftniedrigsten Wichtigkeit W dem Subband SB8, welches sich zwei Subbänder zur rechten des Subbandes SB6 mit der schlechtesten Qualität befindet, zugeordnet.

Ferner wird gemäß dem zweiten Anordnungsmuster für die 5 wichtigsten Bits:
- Das Bit mit der sechstniedrigsten und somit fünfthöchsten Wichtigkeit W dem ersten Subband SB1 zugeordnet.
- Das Bit mit der siebtniedrigsten und somit vierthöchsten Wichtigkeit W dem zweiten Subband SB2 zugeordnet.
- Das Bit mit der achtniedrigsten und somit dritthöchsten Wichtigkeit W dem dritten Subband SB3 zugeordnet.
- Das Bit mit der neuntniedrigsten und somit zweithöchsten Wichtigkeit W dem neunten Subband SB9 zugeordnet.
- Das Bit mit der zehntniedrigsten und somit höchsten Wichtigkeit W dem zehnten Subband SB10 zugeordnet.

Das zweite Anordnungsmuster besteht aus einem Auffüllen der Subbänder, welche nicht durch das erste Anordnungsmuster belegt wurden, von links nach rechts mit steigender Wichtigkeit W der Bits. Ein anderes Beispiel für ein zweites Anordnungsmuster ist die Verwendung eines zufälligen Interleavings. Wenn der Funkstation TX bezüglich der Qualitätsunterschiede der nicht durch das erste Anordnungsmuster belegten Subbänder keine Informationen vorliegen, ist die Ausgestaltung des zweiten Anordnungsmuster an sich beliebig.

Das erste Anordnungsmuster entspricht einer symmetrischen Anordnung um das Qualitäts-Minimum. Liegt dieses Minimum zu nahe an einem Rand des Frequenzbandes FB, so können die Bits, welche neben dem Minimum auf der Seite dieses Randes anzuordnen wären, z.B. auf der Seite des anderen Randes angeordnet werden.

Die erläuterte symmetrische Anordnung um das Minimum gemäß dem ersten Anordnungsmuster ist dadurch begründet, dass oftmals Subbänder neben einem schlechten Subband ebenfalls keine guten Übertragungsbedingungen ermöglichen. Daher ist es vorteilhaft, die am wenigsten wichtigen Bits in der Umgebung des schlechtesten Subbandes anzuordnen. Ob eine derartige Ähnlichkeit zwischen benachbarten Subbändern zu erwarten ist, wird durch die Kohärenzbandbreite beschrieben. Bei einer sehr großen Kohärenzbandbreite liegt der Fall des "flat fading" vor, d.h. die Übertragungsbedingungen sind für alle Subbänder fast gleich. In diesem Fall ist eine Zuordnung von wenig wichtigen Bits zu der Umgebung des schlechtesten Subbandes nicht nötig. Es kann daher eine Anordnung aller Bits gemäß dem zweiten Anordnungsmuster erfolgen. Bei einer mittleren Kohärenzbandbreite besteht eine Ähnlichkeit zwischen einer bestimmten Anzahl benachbarter Subbänder; in diesem Fall kann wie im obigen Beispiel erläutert vorgegangen werden. Bei einer sehr kleinen Kohärenzbandbreite hingegen verhalten sich die Subbänder praktisch unabhängig voneinander, es liegt die Situation des "deep fading" vor. Hier reicht es aus, lediglich das am wenigsten wichtige Bit dem schlechtesten Subband zuzuordnen, und für die restlichen Bits gemäß dem zweiten Anordnungsmuster zu verfahren.

Zur Verarbeitung der von der Funkstation RX auf den Subbändern SB1 bis SB10 empfangenen Bits kennt die Funkstation RX die von der Funkstation TX verwendete Anordnungsvorschrift. Dies lässt sich auf verschiedene Weisen realisieren. So ist es möglich, dass lediglich eine einzige Anordnungsvorschrift existiert, so dass diesbezüglich keine Auswahl erfolgen kann und eine Abstimmung zwischen den Funkstationen TX und RX über die zu verwendende Anordnungsvorschrift nicht nötig ist. Stehen mehrere Anordnungsvorschriften zur Verfügung, so kann entweder die Funkstation TX oder die Funkstation RX zwischen diesen wählen und die getroffene Entscheidung dem Kommunikationspartner mitteilen.

Vorteilhaft ist es, wenn die Funkstation RX die Entscheidung über die zu verwendende Anordnungsvorschrift trifft, denn aufgrund der durch die Funkstation RX durchgeführten Bestimmung der Qualität für die Subbänder SB1 bis SB10 liegen ihr im Gegensatz zur Funkstation TX umfangreiche Kenntnisse über die Übertragungsbedingungen vor. Beispielsweise kann die Funkstation RX die Kohärenzbandbreite bestimmen und aufgrund der oben erläuterten Überlegungen abhängig von der aktuellen Kohärenzbandbreite über die zu verwendende Anordnungsvorschrift entscheiden.

Entscheidet hingegen die Funkstation TX über zu verwendende Anordnungsvorschrift, so ist es vorteilhaft, wenn die Funkstation RX ihr hierfür Informationen zur Verfügung stellt.

Beispielsweise kann die Funkstation RX der Funkstation TX die von ihr ermittelte Kohärenzbandbreite mitteilen.

Mit verschiedenen Anordnungsvorschriften kann eine verschiedenartige Ausgestaltung der übermittelten Qualitätsgröße Q verbunden sein. So kann beispielsweise eine erste Anordnungsvorschrift existieren, bei welcher wie oben erläutert der Funkstation TX lediglich das schlechteste Subband mitgeteilt wird, sowie eine zweite Anordnungsvorschrift, bei welcher der Funkstation TX eine Mehrzahl von Subbändern, entsprechend einer Mehrzahl von Fading-Einbrüchen, mitgeteilt wird, sowie eine dritte Anordnungsvorschrift, bei welcher der Funkstation TX eine Mehrzahl von Subbändern, entsprechend einer Mehrzahl von Subbändern innerhalb des gleichen Fading-Einbruchs, mitgeteilt wird.

In Bezug auf die Übermittlung der Qualitätsgröße Q für die Subbänder sollte hierbei berücksichtigt werden, dass es zur Einsparung von Funkressourcen vorteilhaft ist, diese wenig auszugestalten. In Bezug auf die Signalisierung der zu verwendenden Anordnungsvorschrift sollte berücksichtigt werden, dass der Umfang der hierfür benötigten Funkressourcen mit der Anzahl von Anordnungsvorschriften, zwischen welchen ausgewählt werden kann, ansteigt. Andererseits ermöglicht das Vorhandensein einer Mehrzahl auswählbarer Anordnungsvorschriften eine auf die aktuellen Funkübertragungsbedingungen möglichst gut angepasste Verteilung der von der Funkstation TX an die Funkstation RX zu übertragenden Bits auf die Subbänder SB1 bis SB10.

Die Signalisierung der zu verwendenden Anordnungsvorschrift kann explizit erfolgen, indem eine eigens für diese Zwecke gesendete Signalisierungsinformation verwendet wird. Die zu verwendende Anordnungsvorschrift kann jedoch auch aus einer anderen Information abgeleitet werden, so z.B. aus der übertragenen Qualitätsgröße Q. Bei einer Mehrzahl verwendbarer Anordnungsvorschriften liegt der Funkstation TX und der Funkstation RX eine Zuordnungstabelle zwischen jeweils einer Anordnungsvorschrift und einer expliziten oder impliziten Signalisierungsinformation vor.

Die Anordnungsvorschrift stellt eine Korrelation zwischen der Position eines Bits innerhalb einer Bitfolge einerseits und dem für die Übertragung des Bits verwendeten Subband andererseits dar. Aus Sicht der Funkstation TX handelt es sich bei der Bitfolge um die durch die Kodierung und Punktierung erzeugten Bitfolge I3. Die Funkstation TX ordnet die Bits der Bitfolge I3 im Bestandteil SEL den jeweiligen Subbändern SB1 bis SB10 zu, und gemäß dieser Zuordnung werden die Bits der Bitfolge I3 von der Funkstation TX an die Funkstation RX übertragen.

Die Funkstation RX empfängt auf den Subbändern SB1 bis SB10 ein analoges Signal. Aus diesem analogen Signal werden von der Funkstation RX auf an sich bekannte Weise Bits oder Likelyhood-Werte, d.h. Wahrscheinlichkeiten dafür, dass es sich bei einem empfangenen Wert senderseitig um eine 1 oder eine 0 handelte, ermittelt. Es liegen somit Werte vor, wobei jeder Wert zu einem der Subbänder SB1 bis SB10 korrespondiert, auf welchem er empfangen wurde. In dem Bestandteil DESEL werden diese Werte in eine bestimmte Reihenfolge sortiert, so das sich eine Wertefolge I3* ergibt. Ziel dieser Sortierung ist es, den Umkehrvorgang zur von der Funkstation TX im Bestandteil SEL durchgeführten Zuordnung durchzuführen. Hierzu kommt die gleiche Anordnungsschrift, welche die Funkstation TX zur Verteilung der Bits der Bitfolge I3 auf die Subbänder SB1 bis SB10 anwendet, zum Einsatz. Aus Sicht der Funkstation RX handelt es sich bei der Wertefolge, deren einzelne Positionen durch die Anordnungsvorschrift mit den Subbändern SB1 bis SB10 korreliert werden, um die Wertefolge I3*. In der erstellten Wertefolge I3* gehört somit ein Wert in einer bestimmten Position innerhalb der Wertefolge I3* zu dem Bit an der entsprechenden Position innerhalb der Bitfolge I3.

Die Funkstation RX führt im Anschluss eine Dekodierung der Wertefolge I3* durch, d.h. sie führt auf an sich bekannte Weise die Umkehrschritte der senderseitigen Punktierung und Dekodierung durch. Als Ergebnis gibt der Dekodierer DEC die Bitfolge I1* aus.

Das erläuterte Vorgehen weist den Vorteil auf, dass durch die Berücksichtigung der Wichtigkeiten und der Kanalqualitäten eine Verringerung der Bitfehlerrate erreicht werden kann gegenüber einer Verteilung der Bits auf Subbänder ohne Berücksichtigung dieser beiden Größen. Dies trifft auch auf Fälle zu, in welchen -wie anhand von Figur 2 erläutert- der Funkstation TX lediglich wenig Information betreffend die Qualitätsgröße Q der Kanäle zur Verfügung gestellt werden.

Die erläuterte Vorgehensweise kann auch im Rahmen eines ARQ (Automatic Repeat Request) Verfahrens eingesetzt werden. Hierfür kann z.B. vorgesehen sein, dass die Funkstation TX bei einer wiederholten Versendung grundsätzlich eine bestimmte Anordnungsvorschrift oder stets die gleiche Anordnungsvorschrift wie bei der erstmaligen Versendung verwendet, so dass die für die wiederholte Versendung verwendete Anordnungsvorschrift nicht signalisiert werden muss. Weiterhin kann zur Verbesserung der wiederholten Übertragung im Vergleich zur ursprünglichen vorgesehen sein, dass grundsätzlich eine andere Anordnungsvorschrift verwendet wird als bei der ursprünglichen Übertragung.

Wie erläutert werden zur effizienten Übertragung von Informationen per Funk Bits in Abhängigkeit von ihrer Wichtigkeit auf verschiedene Kanäle verteilt. Dabei wurde die vorteilhafte Situation betrachtet, dass es sich bei den verschiedenen Kanälen um verschiedene Subbänder einer Frequenzbandes handelt. Die Erfindung ist jedoch auch auf andere Funkkanäle anwendbar, so können die Bits analog zum erläuterten Vorgehen in Abhängigkeit von ihrer Wichtigkeit auf verschiedene Kodes oder verschiedene Raumrichtungen verteilt werden.

## Patentansprüche

1. Verfahren zur Kommunikation per Funk, bei dem
einem Sender (TX) eine an einen Empfänger (RX) zu versendende Bitfolge (I1) vorliegt,
der Sender (TX) eine Kodierung der Bitfolge (I1) durchführt,
der Sender (TX) anhand eines Verteilungsmusters eine Verteilung der Bits der kodierten Bitfolge (I2) auf eine Mehrzahl von Funkkanäle (SB1, SB2, SB3, SB4, SB5, SB6, SB7, SB8, SB9, SB10) durchführt,
wobei gemäß dem Verteilungsmuster Wichtigkeiten (W) der Bits der kodierten Bitfolge (I2) und Informationen (Q) betreffend eine Qualität von mindestens einem der Funkkanäle (SB1, SB2, SB3, SB4, SB5, SB6, SB7, SB8, SB9, SB10) berücksichtigt werden,
wobei die Wichtigkeiten (W) einer Bedeutung des jeweiligen Bits bei einer Dekodierung durch den Empfänger (RX) entsprechen, und
der Sender (TX) die Bits der kodierten Bitfolge (I2) unter Verwendung der Mehrzahl von Funkkanälen (SB1, SB2, SB3, SB4, SB5, SB6, SB7, SB8, SB9, SB10) gemäß der durchgeführten Verteilung sendet.

2. Verfahren zur Kommunikation per Funk, bei dem
ein Empfänger (RX) Informationen auf einer Mehrzahl von Funkkanälen (SB1, SB2, SB3, SB4, SB5, SB6, SB7, SB8, SB9, SB10) empfängt,
der Empfänger (RX) aus den Informationen Werte ermittelt, der Empfänger (RX) anhand eines Verteilungsmusters aus den Werten eine Wertefolge (I3*) erstellt,
wobei gemäß dem Verteilungsmuster Wichtigkeiten (W) der Werte der Wertefolge (I3*) und Informationen (Q) betreffend eine Qualität von mindestens einem der Funkkanäle (SB1, SB2, SB3, SB4, SB5, SB6, SB7, SB8, SB9, SB10) berücksichtigt werden,
wobei die Wichtigkeiten (W) einer Bedeutung des jeweiligen Wertes bei einer Dekodierung durch den Empfänger (RX) entsprechen, und
der Empfänger (RX) eine Dekodierung der erstellten Wertefolge (I3*) durchführt.

3. Verfahren nach Anspruch 1 und 2, bei dem
der Sender (TX) und der Empfänger (RX) das gleiche Verteilungsmuster einsetzen.

4. Verfahren nach einem der Ansprüche 1 bis 3, bei dem zuvor der Sender (TX) dem Empfänger (RX) das zu verwendende Verteilungsmuster mitteilt.

5. Verfahren nach einem der Ansprüche 1 bis 3, bei dem zuvor der Empfänger (RX) dem Sender (TX) das zu verwendende Verteilungsmuster mitteilt.

6. Verfahren nach einem der Ansprüche 1 bis 5, bei dem zuvor über das zu verwendende Verteilungsmuster entschieden wird unter Verwendung von Informationen betreffend Funkausbreitungsbedingungen zwischen dem Sender (TX) und dem Empfänger (RX).

7. Verfahren nach einem der Ansprüche 1 bis 6, bei dem zuvor der Empfänger (RX) dem Sender (TX) die Informationen (Q) betreffend die Qualität von mindestens einem der Funkkanäle (SB1, SB2, SB3, SB4, SB5, SB6, SB7, SB8, SB9, SB10) übermittelt.

8. Verfahren nach Anspruch 7, bei dem
die Informationen (Q) betreffend die Qualität von mindestens einem der Funkkanäle (SB1, SB2, SB3, SB4, SB5, SB6, SB7, SB8, SB9, SB10) genau einen der Funkkanäle (SB1, SB2, SB3, SB4, SB5, SB6, SB7, SB8, SB9, SB10) betreffen.

9. Verfahren nach einem der Ansprüche 1 bis 8, bei dem
das Verteilungsmuster Korrelationen zwischen jeweils einer Position innerhalb einer Folge (I2, I3*) und einem Funkkanal (SB1, SB2, SB3, SB4, SB5, SB6, SB7, SB8, SB9, SB10) angibt.

10. Verfahren nach einem der Ansprüche 1 bis 9, bei dem
das Verteilungsmuster eine Zuordnung von unwichtigen Bits und/oder Werten zu Funkkanälen (SB1, SB2, SB3, SB4, SB5, SB6, SB7, SB8, SB9, SB10) mit schlechter Qualität umfasst.

11. Verfahren nach einem der Ansprüche 1 bis 10, bei dem
das Verteilungsmuster eine symmetrische Verteilung von unwichtigen Bits und/oder Werten um einen Funkkanal (SB1, SB2, SB3, SB4, SB5, SB6, SB7, SB8, SB9, SB10) mit schlechter Qualität umfasst.

12. Verfahren nach einem der Ansprüche 1 bis 11, bei dem
für die Berücksichtigung der Wichtigkeiten (W) eine Zuordnungsvorschrift eingesetzt wird, welche jeder Position innerhalb einer Folge (I2, I3*) eine Wichtigkeit (W) zuordnet.

13. Verfahren nach einem der Ansprüche 1 bis 12, bei dem
nach einer fehlgeschlagenen Übertragung von dem Sender zu dem Empfänger bei einer wiederholten Verarbeitung der gleichen Informationen ein anderes Verteilungsmuster eingesetzt wird.

14. Verfahren nach einem der Ansprüche 1 bis 13, bei dem
es sich bei den Funkkanälen (SB1, SB2, SB3, SB4, SB5, SB6, SB7, SB8, SB9, SB10) um Subbänder eines Frequenzbandes (FB) handelt.

15. Sender (TX) zur Kommunikation per Funk, welchem eine an
einen Empfänger (RX) zu versendende Bitfolge (I1) vorliegt,
mit Mitteln (ENC) zum Kodieren der Bitfolge (I1),
mit Mitteln (SEL) zum Verteilen der Bits der kodierten Bitfolge (I2) auf eine Mehrzahl von Funkkanäle (SB1, SB2, SB3, SB4, SB5, SB6, SB7, SB8, SB9, SB10) anhand eines Verteilungsmusters,
wobei gemäß dem Verteilungsmuster Wichtigkeiten (W) der Bits der kodierten Bitfolge (12) und Informationen (Q) betreffend eine Qualität von mindestens einem der Funkkanäle (SB1, SB2, SB3, SB4, SB5, SB6, SB7, SB8, SB9, SB10) berücksichtigt werden,
wobei die Wichtigkeiten (W) einer Bedeutung des jeweiligen Bits bei einer Dekodierung durch den Empfänger (RX) entsprechen,
mit Mitteln zum Senden der Bits der kodierten Bitfolge (I2) unter Verwendung der Mehrzahl von Funkkanälen (SB1, SB2, SB3, SB4, SB5, SB6, SB7, SB8, SB9, SB10) gemäß der durchgeführten Verteilung.

16. Empfänger (RX) zur Kommunikation per Funk,
mit Mitteln zum Empfangen von Informationen auf einer Mehrzahl von Funkkanälen (SB1, SB2, SB3, SB4, SB5, SB6, SB7, SB8, SB9, SB10),
mit Mitteln zum Ermitteln von Werten aus den Informationen,
mit Mitteln (DESEL) zum Erstellen einer Wertefolge (I3*) aus den Werten anhand eines Verteilungsmusters,
wobei gemäß dem Verteilungsmuster Wichtigkeiten (W) der Werte der Wertefolge (I3*) und Informationen (Q) betreffend eine Qualität von mindestens einem der Funkkanäle (SB1, SB2, SB3, SB4, SB5 , SB6, SB7, SB8, SB9, SB10) berücksichtigt werden,
wobei die Wichtigkeiten (W) einer Bedeutung des jeweiligen Wertes bei einer Dekodierung durch den Empfänger (RX) entsprechen,
mit Mitteln (DEC) zum Dekodieren der erstellten Wertefolge (I3*) .

17. Computerprogrammprodukt für einen Sender (TX) zur Kommunikation per Funk, welchem eine an einen Empfänger (RX) zu versendende Bitfolge (I1) vorliegt,
mit Mitteln zum Kodieren der Bitfolge (I1),
mit Mitteln zum Verteilen der Bits der kodierten Bitfolge (I2) auf eine Mehrzahl von Funkkanäle (SB1, SB2, SB3, SB4, SB5, SB6, SB7, SB8, SB9, SB10) anhand eines Verteilungsmusters,
wobei gemäß dem Verteilungsmuster Wichtigkeiten (W) der Bits der kodierten Bitfolge (I2) und Informationen (Q) betreffend eine Qualität von mindestens einem der Funkkanäle (SB1, SB2, SB3, SB4, SB5, SB6, SB7, SB8, SB9, SB10) berücksichtigt werden,
wobei die Wichtigkeiten (W) einer Bedeutung des jeweiligen Bits bei einer Dekodierung durch den Empfänger (RX) entsprechen.

18. Computerprogrammprodukt für einen Empfänger (RX) zur Kommunikation per Funk, welchem aus auf einer Mehrzahl von Funkkanälen (SB1, SB2, SB3, SB4, SB5, SB6, SB7, SB8, SB9, SB10) empfangenen Informationen ermittelte Werte vorliegen,
mit Mitteln zum Erstellen einer Wertefolge (I3*) aus den Werten anhand eines Verteilungsmusters,
wobei gemäß dem Verteilungsmuster Wichtigkeiten (W) der Werte der Wertefolge (I3*) und Informationen (Q) betreffend eine Qualität von mindestens einem der Funkkanäle (SB1, SB2, SB3, SB4, SB5, SB6, SB7, SB8, SB9, SB10) berücksichtigt werden,
wobei die Wichtigkeiten (W) einer Bedeutung des jeweiligen Wertes bei einer Dekodierung durch den Empfänger (RX) entsprechen,
mit Mitteln zum Dekodieren der erstellten Wertefolge (I3*) .
